(19) Europäisches Patentamt
European Patent Office
Office européen des brevets

(11) **EP 2 496 037 B1**

(12) **EUROPEAN PATENT SPECIFICATION**

(45) Date of publication and mention
of the grant of the patent:
**25.05.2016 Bulletin 2016/21**

(21) Application number: **10788628.5**

(22) Date of filing: **19.03.2010**

(51) Int Cl.:
***H04W 74/08*** (2009.01)

(86) International application number:
**PCT/CN2010/071166**

(87) International publication number:
**WO 2010/145232 (23.12.2010 Gazette 2010/51)**

(54) **ACCESS PROCESSING METHOD AND USER EQUIPMENT**

ZUGRIFFSVERARBEITUNGSVERFAHREN UND BENUTZERGERÄT

PROCÉDÉ DE TRAITEMENT D'ACCÈS ET ÉQUIPEMENT UTILISATEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.10.2009 CN 200910209623**

(43) Date of publication of application:
**05.09.2012 Bulletin 2012/36**

(73) Proprietor: **ZTE Corporation**
**Shenzhen, Guangdong 518057 (CN)**

(72) Inventors:
• **WANG, Lin**
**Shenzhen**
**Guangdong 518057 (CN)**
• **LIU, Yu**
**Shenzhen**
**Guangdong 518057 (CN)**
• **ZHANG, Peng**
**Shenzhen**
**Guangdong 518057 (CN)**
• **LIU, Liping**
**Shenzhen**
**Guangdong 518057 (CN)**

(74) Representative: **Beck Greener**
**Fulwood House**
**12 Fulwood Place**
**London WC1V 6HR (GB)**

(56) References cited:
**EP-A2- 2 086 276          CN-A- 101 547 520**
**US-A1- 2007 201 377**

• **SONY INTERNATIONAL (EUROPE): "Backoff algorithm with dependency on failed attempts", 3GPP DRAFT; R2-99229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Yokohama; 19990521, 21 May 1999 (1999-05-21), XP050112526, [retrieved on 1999-05-21]**
• **3GPP DRAFT; R2-081035 LTE RACH_M2_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080205, 5 February 2008 (2008-02-05), XP050138825, [retrieved on 2008-02-05]**

# Description

## Field of the Invention

The present invention relates to the communication field, and in particular to an access processing method and a User Equipment (UE).

## Background of the Invention

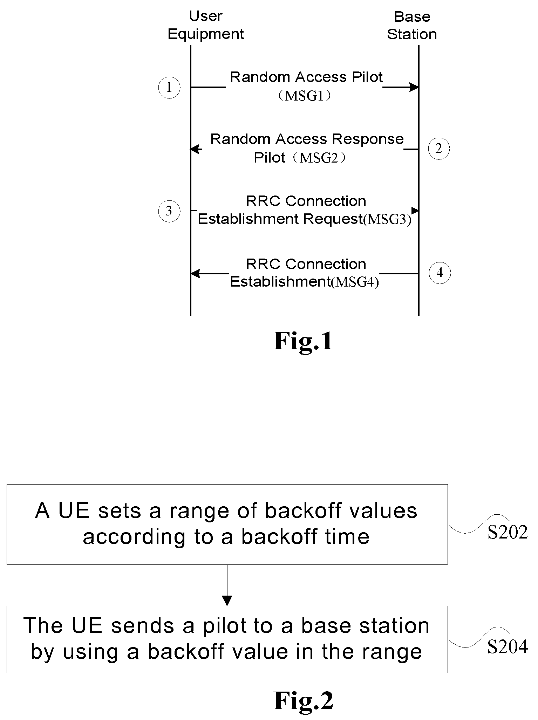

In wireless communication system, the average access delay is an important index for determining the system performance. In Long-Term Evolution (LTE) system, a UE may trigger the random access procedure when being powered or executing the Non Access Stratum (NAS) process. Fig. 1 is a schematic diagram of the signaling interaction of random access according to the related art. A terminal carries a randomly selected pilot Identifier (ID), also called preamble ID, in a pilot (message 1 (MSG1), also called preamble), and sends the pilot to a base station. If the Random Access Preamble ID (RAPID) in the received Random Access Response (RAR, also called MSG2) sub-header is consistent with the sent random access preamble ID, it is considered that the preamble process is successful (preamble success), and the Contention Resolution (CR) process may be continued, that is, Steps 3 and 4 in Fig. 1. The terminal sends a Radio Resource Control (RRC) connection establishment request to the base station by an MSG 3. If the Contention Resolution ID (CRID) analyzed in an MSG4 is consistent with that in MSG3, it is considered that the CR is successful and the terminal successfully accesses a network. Otherwise, the terminal will resend MSG1 to try re-accessing to the network.

If multiple terminals access the network at the same time, the base station will inform the terminals, which fails to access, to back off by carrying a Backoff Indication (BI) sub-header in the MSG2, according to the current processing capability (selective). The user equipment may select a backoff value according to the backoff number when trying the access next time (for example, Table 1 illustrates the corresponding relationships between the backoff value numbers and the corresponding backoff thresholds according to the related art, with ms as the unit), and resend the MSG1 after backing off for a period of time, so the probability of collision again may be reduced and the access success rate may increase. Furthermore, if the terminal receives the BI sub-header through the MSG2, and even if the preamble process is successful (preamble success), it will still save this value. Upon the CR is failed, the Backoff is performed by using this BI value when resending the MSG1.

Table 1

| Number | Backoff value (ms) |
| --- | --- |
| 0 | 0 |

(continued)

| Number | Backoff value (ms) |
| --- | --- |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | Reserved |
| 14 | Reserved |
| 15 | Reserved |

The protocol also proposes that, when the MSG1 is resent, the sending power of the terminal is increased by the power Ramping Step (power regulation factor, which is configured by a System Information Block2 (SIB2)) by means of one more resending, to improve the probability of detection success, but it is possible that a terminal needs many attempts, which lasts for a long time, to successfully access the network if each MSG2 received by the terminal contains the BI sub-header without being matched with the preamble ID or the CR is failed. While some terminals can access successfully in the first attempt, and therefore it can not be assured that the terminal has the fairness for accessing to the network and the shortened access delay.

XP50112526 Sony International (Europe): "Backoff algorithm with dependency on failed attempts" describes a proposed backoff algorithm as part of a random access network. The UE determines a backoff parameter dependent on the number of already failed attempts, the backoff parameter is selected at random from an interval which increases as the number of failed attempts increases.

EP-A-2,086,276 describes a method for performing random access in a wireless network, wherein the backoff information sent to UEs in a network includes information regarding a UE to which the backoff parameter is applied.

LG Electronics: "Message 2 structure with backoff parameters" describes the application of a backoff parameter and discusses the advantages of applying different backoff parameters for different RAIDS.

At present, there is no effective solution to solve the problems of the UE having long access delay and lacking of fairness for accessing to the network in the related art.

## Summary of the Invention

The present invention is provided to solve the problems of the UE having long access delay and lacking of fairness for accessing to the network in the related art, and therefore, an access processing solution is provided by the present invention to solve the above problems.

The invention is described in the appended claims 1 and 6. Further embodiments can be found in the dependent claims.

- According to one aspect of the present invention, an access processing method is provided.

The access processing method according to the present invention comprises: setting, by a User Equipment (UE), a range of backoff values according to the number of backoffs; and sending, by the UE, a pilot to a base station by using a backoff value in the range.

Preferably, the step of setting, by the UE, the range of the backoff values according to the number of backoffs comprises: the greater the number of backoffs is, the less the upper limit of the backoff values in the range set by the UE is.

Preferably, the step of setting, by the UE, the range of the backoff values according to the number of backoffs comprises: receiving, by the UE, an Random Access Response (RAR) from the base station, wherein the RAR carries a Backoff Indication (BI) sub-header; determining, by the UE, a maximum backoff value according to the BI sub-header; and setting, by the UE, the range according to the number of backoffs and the maximum backoff value.

Preferably, the step of setting, by the UE, the range according to the number of backoffs and the maximum backoff value comprises: reducing, by the UE, the maximum backoff value according to the number of backoffs, and setting the reduced maximum backoff value as the upper limit of the backoff values in the range.

Preferably, the step of setting, by the UE, the range according to the number of backoffs and the maximum backoff value comprises: dividing, by the UE, a backoff value range between 0 and the maximum backoff value into groups; and making, by the UE, the groups corresponding to the number of backoffs.

Preferably, the step of sending, by the UE, the pilot to the base station by using the backoff value in the range comprises: selecting, by the UE, the backoff value from the range according to uniform distribution principle; and sending, by the UE, the pilot to the base station by using the backoff value.

To achieve the objective, according to another aspect of the present invention, a User Equipment (UE) is provided.

The UE according to the present invention includes: a setting module, configured to set a range of backoff values according to the number of backoffs; and a sending module, configured to send a pilot to a base station by using a backoff value in the range.

Preferably, the setting module comprises: a receiving sub-module, configured to receive an Random Access Response (RAR) from the base station, wherein the RAR carries a Backoff Indication (BI) sub-header; a determining sub-module, configured to determine a maximum backoff value according to the BI sub-header; and a setting sub-module, configured to set the range according to the number of backoffs and the maximum backoff value.

Preferably, the setting sub-module comprises: a reducing unit, configured to reduce the maximum backoff value according to the number of backoffs; and a setting unit, configured to set the reduced maximum backoff value as the upper limit of the backoff values in the range.

Preferably, the setting sub-module comprises: a grouping unit, configured to divide a backoff value range between 0 and the maximum backoff value into groups; and a corresponding unit, configured to make the groups corresponding to the number of backoffs.

According to the present invention, the problems of the UE having long access delay and lacking of fairness for accessing to the network in the related art are solved by means of setting the range of the backoff value according to the numbers of the backoffs by the UE, and thereby the effects of improving the access delay and system performance are achieved.

## Brief Description of the Drawings

The drawings herein provide a further understanding of the present invention and constitute one part of this application. The exemplary embodiments of the present invention and explanation thereof are used for the explanation of the present invention without unduly limiting the scope of the present invention. In the drawings:

Fig. 1 is a schematic diagram of the signaling interaction of random access according to the related art;
Fig. 2 is a flowchart of an access processing method according to one embodiment of the present invention;
Fig. 3 is a flowchart of an access processing method according to the first embodiment of the present invention;
Fig. 4 is a schematic structural diagram of an MAC PDU of a MSG2 according to one embodiment of the present invention;
Fig. 5 is a schematic diagram of the delay of an access process according to one embodiment of the present invention;
Fig. 6 is a structural block diagram of a UE according to one embodiment of the present invention;

Fig. 7 is a structural block diagram of a specific structure of a UE according to one embodiment of the present invention; and

Fig. 8 is a structural block diagram of another specific structure of a UE according to one embodiment of the present invention.

## Detailed Description of Embodiments

In consideration of the problems of the UE, when accessing to the network, having the long access delay and lacking of fairness in the related art, an access processing solution is provided by the present invention, with the processing principle as follows: a UE sets a range of backoff values according to the number of the backoffs; and the UE sends a pilot to a base station by using a backoff value in the range. In the present invention, the selection of the backoff value is in conjunction with how many times that the UE sends the current pilot. In the case that the UE sends it for relatively more times, the re-access may be attempted after a shorter period of time of the backoff. In the case that the UE sends it for relatively less times, the backoff value can be selected in a relatively larger range. Therefore the average access delay of the UE and the probability of collision again are reduced, and the system performance is improved. Moreover, the access fairness of multiple UEs is guaranteed and the algorithm has the advantages of low operation complexity, flexible scenario configuration and the like in the engineering implementation.

It should be noted that, the embodiments and features thereof in this application can be combined with each other if there is no conflict. The present invention will be explained below in detail with reference to the drawings and in conjunction with the embodiments.

In the following embodiments, the steps shown in the flowchart of the drawings can be executed, for example, in the computer system of a set of computer executable instructions. In addition, a logic order is shown in the flowchart, but the shown or described steps can be executed in different orders under some conditions.

Method Embodiment

A UE needs to back off to resend the MSG1 when the MSG2 carries the BI and the preamble ID of the UE is not matched with the RAPID in the RAR sub-header (i.e., preamble failure) or the CR is failed.

According to one embodiment of the present invention, an acccess processing method is provided.

Fig. 2 is a flowchart of an access processing method according to one embodiment of the present invention. As shown in Fig. 2, the method comprises the steps from S202 to S204 as follows.

Step 202: A UE sets a range of backoff values according to the number of backoffs.

Step 204: The UE sends a pilot to a base station by using a backoff value in the backoff value range.

The problems of the UE, when accessing to the network, having long access delay and lacking of fairness in the related art are solved by means of setting the range of the backoff values according to the number of backoffs by the UE, and thereby the effects of improving the access delay and system performance are achieved.

In the step 202, when the UE sets the range of the backoff values according to the number of backoffs, the greater the number of backoffs is, the smaller the upper limit of the backoff values in the backoff value range set by the UE is.

The selection of the backoff value is in conjuction with how many times that the UE sends the current pilot. In the case that the UE sends it for relatively more times, the re-access can be attemped after a shorter period of time of backoff, to reduce the average access delay of the UE while reducing the probability of collision again, and thereby the system performance is improved, and the access fairness of multiple UEs is ensured.

The step of the UE setting the range of the backoff values according to the number of the backoffs comprises the steps as follows: the base station sends an RAR to the UE, wherein the RAR carries a BI sub-header; the UE queries the Table 1 according to the BI sub-header to determine the maximum backoff value before resending the MSG1, in the case that the MSG2 received by the UE has the BI, the preamble process is failed or the preamble process is successful (preamble failure or preamble success) but the CR is failed; and the UE sets the range of the backoff values according to the number of backoffs and the maximum backoff value, that is, the UE resets a new upper limit of the backoff values in combination with the number of backoffs (or changes the lower limit at the same time), wherein the setting principle is: the upper limit of the backoff values of the UE with a greater number of backoffs is less than that of the UE with a less number of backoffs.

In this case, the UE sets the range according to the number of backoffs and the maximum backoff value in the modes as follows.

Mode I, the UE reduces the maximum backoff value according to the number of backoffs, and sets the reduced maximum backoff value as the upper limit of the backoff values in the range.

The maximum backoff value is reduced according to the number of backoffs, then the UE with a greater number of backoffs can try to access again after a shorter period so that the average access delay of the UE is reduced, and the access fairness of the UE is guaranteed.

Mode II, the UE divides the backoff value range between 0 and the maximum backoff value into groups, and then allows the grouped backoff value ranges corresponding to the number of backoffs. During the grouping process, the following principle may be followed: the greater the number of backoffs is, the less the upper limit of the grouped backoff value range corresponding to the number of backoffs is.

The backoff value range is divided to groups and the grouped backoff value ranges are corresponding to the number of backoffs, so that the UE can select an appropriate value in one group, which may improve the flexibility of selecting the backoff value and access by the UE while reducing the average access delay of the UE.

In the step 204, the step of the UE sending the pilot to the base station by using the backoff value in the range comprises the steps as follows: the UE selects a backoff value from the range between [min backoff value; max backoff value] based on the maximum backoff value (the min backoff value represents a new lower limit of the backoff values, and the lower limit is 0 if the backoff values are not changed) following the principle of the uniform distribution; and the UE sends the pilot to the base station by using the backoff value, that is, the UE delays sending MSG1 according to the backoff value selected in the newly defined backoff value range. The UE cannot delete the saved BI number and backoff value until the UE successfully accesses the network, and the whole flow is completed. If the access is still failed, the setting of the backoff value range is continued until the high-layer timer is time-out.

According to the method, by means of processing the BI value in the MSG2 for the base station, the UE resets the upper and lower limits of the backoff values in the range of the backoff values corresponding to the BI when resending the MSG1, so that the UE, which resends it for more times, selects the interval of the backoff values which is less than that selected by other UEs, backing off at the same time with said UE, which resends it for less times.

The implementations of the embodiments in the present invention will be described below in detail with reference to examples.

Example I

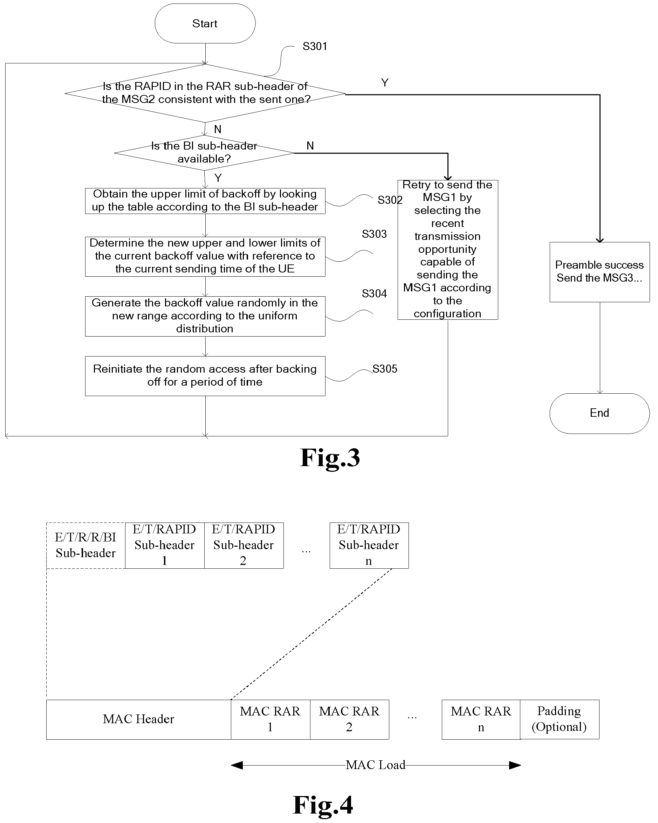

Fig. 3 is a flowchart of an access processing method according to one embodiment of the present invention. As shown in the Fig. 3, the method comprises the steps from S301 to S305 as follows.

Step 301: A terminal has the opportunity of resending a MSG1 and executing the step 302 in the case of preamble failure or CR failure and a high-layer timer (for example, T300) not being time-out, and otherwise the access is failed if the high-layer timer is time-out.

Step 302: if a MSG2 carries a BI sub-header (the BI sub-header is represented by 4 bits and Fig. 4 is a schematic diagram of the structure of an MAC PDU of the MSG2 according to one embodiment of the present invention), the backoff value corresponding to the BI sub-header is determined according to the Table 1 and the Step 303 is executed. If the MSG2 does not have the BI sub-header, the terminal selects the soonest opportunity for resending the MSG1 according to the random access configuration parameters.

Step 303: The upper limit (max backoff value) of the backoff values and lower limit (min backoff value) of the backoff values are determined in combination with the number that the terminal sends the MSG1.

Step 304: A backoff value is selected from the range between the min backoff value and the max backoff value, according to the uniform distribution principle.

Step 305: the MSG1 is sent according to the backoff value and the step 301 is repeated in the case of preamble failure, and otherwise, a MSG3 is sent, and the step 301 is repeated if CR is failed, and the access is successful if CR is successful.

In the related art, the mode processing backoff value for individual UEs is the same without considering the number of the accesses of the terminal, and therefore the access delay of the terminals attempting for many times cannot be guaranteed. In fact, the delay of the access process itself is less than the duration of backoff. For a terminal accessing successfully in the first attempt, the access delay is of dozens of ms. Once the attempt is failed, one backoff value can be up hundreds of ms at the most, which will affect the access performance significantly. The method of the present invention is combined with the power control, to effectively improve the success rate and reduce the access relay, and the system performance is improved.

Embodiment II

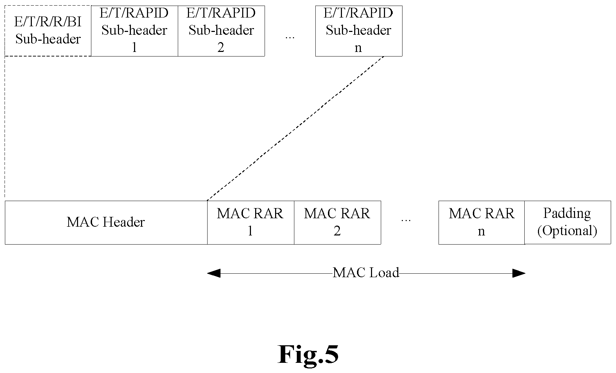

Fig. 5 is a schematic diagram of the delay of access process according to one embodiment of the present invention. For a terminal accessing successfully after making the attempt for n times, provided that a received MSG2 carries a BI sub-header when a MSG1 is sent every time and each failure is caused by preamble failure (the situation is similar if the reason of failure is CR failure), the access delay consists of 3 parts: (1) during the access failure for n-1 times, the waiting period of n-1 Transmission Time Interval (TTI) Windows; (2) the waiting period from the (n-1)th failure to the launching of the next access, wherein this value is the maximum backoff value obtained by looking up the table according to the sequential number in the BI indication, and the backoff value is randomly selected from the range of 0 to the backoff value according to the uniform distribution principle; and (3) the duration from the transmission of the MSG1 to the receipt of the MSG2, when the nth access is successful.

In this case, the TTI Window is a window of waiting the MSG2 after sending the MSG1, wherein the value (usually, 2ms to 10ms) is configured by the high layer. The duration between sending the MSG1 and successfully receiving the MSG2 is shorter and does not exceed the TTI Window.

Therefore, to reduce the access delay, the period of backoff before resending the MSG1 is important, instead of the TTI Window and the delay during the successful access (because these two parts are relatively small in comparison with the delay of the former), that is, the second part of the delay is in interest.

Provided that, according to the protocol mode, the BI numbers of n-1 access failures (parsed in the BI sub-header) are $\{BI_1, BI_2, ..., BI_{n-1}\}$ respectively and the backoff values corresponding to the Table 1 are $\{BV_1, BV_2, ..., BV_{n-1}\}$ respectively, the average duration of n-1 backoffs is

$$\frac{1}{2}\left(BV_1 + BV_2 + ... + BV_{n-1}\right)$$

An algorithm, for selecting a new backoff value with reference to the number of the terminal send it, is provided as follows:

The backoff value is divided into m parts equally according to the maximum number m of the terminal sending it (acquired from the system information), and only the upper limit of the backoff values is reset without changing the lower limit of the backoff values.

In the case of the first resending, the interval of the backoff values is
in case of the second resending, the interval of the backoff values is reduced a little with the interval between 0 and (1-1/m) x backoff value;
in the case of the nth resending, the interval of the backoff values is between 0 and ((m-n+1)/m) x backoff value.

According to the algorithm above, provided that the maximum number, that the terminal send it, is m and the corresponding kth backoff value is $\dfrac{m-k+1}{m}BV_k$,

the average backoff period of n-1 resending operations

is $\displaystyle\sum_{k=1}^{n-1}\frac{m-k+1}{2m}BV_k(n-1<m)$ and the average

backoff period can be reduced by

$\displaystyle\sum_{k=1}^{n-1}\frac{k-1}{2m}BV_k(n-1<m)$. When $BV_k$ is greater, the

average access delay can be reduced effectively.

Example III

Provided that two UEs send MSG1s at the same time and the MAC headers of MSG2s received by the UEs from the base station contain the BI sub-headers, the sub-header of RAR does not have matched RAPID (that is, preamble failure). It is supposed that the UE1 sends it for the $k$ th time and UE2 sends it for the $l$ th time (and $l>k$). According to the Table 1, the backoff value corresponding to the BI sub-header is $BV$.

According to the algorithm above, during the resending, the backoff value of the UE1 is

$$\frac{m-k+1}{m}BV,$$ and the backoff value of the UE2 is

$$\frac{m-l+1}{m}BV,$$ and the period of backoff of UE1 is greater than that of UE2 by $\dfrac{l-k}{m}BV$. According to the uniform distribution principle, the average of the back-

off values will be reduced by $\dfrac{l-k}{2m}BV$. When $BV$ is greater or the different between $l$ and $k$ is greater, the difference between the average values of the backoffs of UE1 and UE2 is greater as well, and thereby the access fairness and access delay are obviously improved.

Example IV

The backoff value is divided into m parts equally according to the maximum number, m, that the terminal sends it (acquired from the system information) and the upper and lower limits of the backoff interval are reset.

In the case of the first resending, the interval of backoff values is between (m-1)/m x backoff value and the backoff value;
in the case of the second resending, the interval of backoff values is between (m-2)/m x backoff value and (m-1)/m x backoff value;
in the case of the nth resending, the interval of backoff values is between (m-n)/m x backoff value and (m-n+1)/m x backoff value.

According to the algorithm, the backoff values of the terminals with different number of backoffs are grouped to different intervals, and besides, the intervals of the backoff values are not overlapped, so that it is guaranteed that the backoff value selected by the terminal resending for more times is less than that selected by the terminal resending for less times, and thereby the access fairness is improved.

Device Embodiment

According to one embodiment of the present invention, a UE is provided.

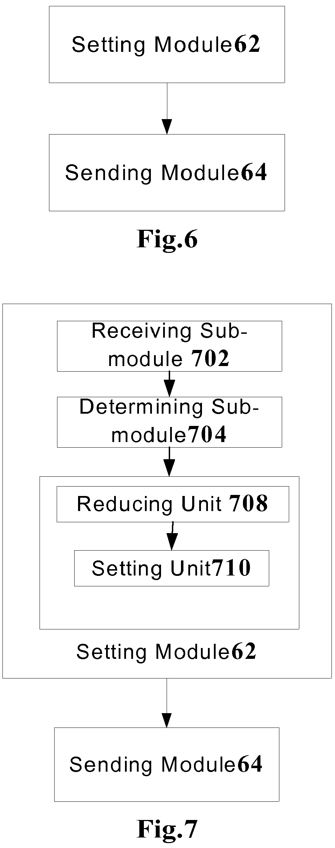

Fig. 6 is a structural block diagram of a UE according to one embodiment of the present invention. As shown in Fig. 6, the device comprises: a setting module 62, and a sending module 64, which are described below in detail.

The setting module 62 is configured to set a range of backoff values according to the number of backoffs; and the sending module 64 is connected to the setting module 62 and configured to send a pilot to the base station by using a backoff value in the range.

Fig. 7 is a structural diagram of a specific structure of a UE according to one embodiment of the present invention. As shown in Fig. 7, the setting module 62 comprises: a receiving sub-module 702, a determining sub-module 704, and a setting sub-module 706, which are described below in detail.

The receiving sub-module 702 is configured to receive an RAR from the base station, wherein the RAR carries a BI sub-header; the determining sub-module 704 is connected to the receiving sub-module 702 and configured to determine the maximum backoff value according to the BI sub-header; and the setting sub-module 706 is connected to the determining sub-module 704 and configured to set the range according to the number of backoffs and the maximum backoff value.

The setting sub-module 706 comprises: a reducing unit 708 and a setting unit 710, which are described below in detail.

The reducing unit 708 is configured to reduce the maximum backoff value according to the number of backoffs; and the setting unit 710 is connected to the reducing unit 708 and configured to set the reduced maximum backoff value as the upper limit of the backoff values in the range.

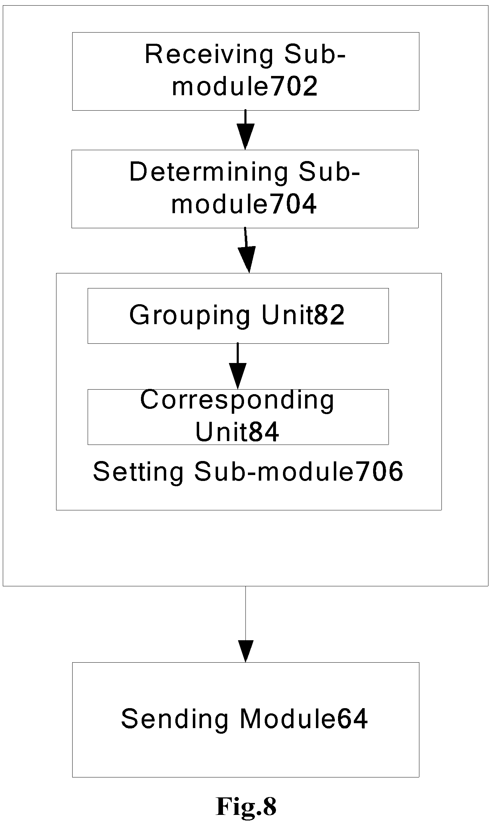

Fig. 8 is a structural block diagram of another specific structure of a UE according to one embodiment of the present invention. As shown in Fig. 8, the setting sub-module 706 comprises: a grouping unit 82 and a corresponding unit 84, which are described below in detail.

The grouping unit 82 is configured to divide the backoff value range between 0 and the maximum backoff value into groups; and the corresponding unit 84 is connected to the grouping unit 82 and configured to make the groups corresponding to the number of backoffs.

The modules in the embodiment of the present invention are located in the MAC layer of the UE and configured to analyze the BI sub-header, obtain the backoff value according to the Table 1, set a new backoff threshold with reference to the number that the UE sends the MSG1, select the backoff value in the new threshold range according to the uniform distribution principle and use the backoff value when resending the MSG1.

It should be noted that the UE described in the device embodiments corresponds to that described in the method embodiments, and the specific implementations thereof have been described in the method embodiments in detail, thereby needing no further description.

To sum up, according to the present invention, the access fairness and access delay are improved so as to finally improve the system performance.

It should be noted that the steps shown in the flowcharts of the drawings can be executed, for example, in the computer system of a set of computer executable instructions. In addition, the logic orders are shown in the flowcharts, but the shown or described steps can be executed in a different order in some cases.

Obviously, those skilled in the art shall understand that the modules or steps of the present invention may be implemented by general calculating devices and integrated in one calculating device or distributed on a network consisting of multiple computing devices. Alternatively, the modules or the steps may be implemented by executable program codes of the calculating devices, so that they may be stored in a storage device and executed by a calculating device, or respectively made into integrated circuit modules or a single integrated circuit module. In this way, the present invention is not limited to any specific combination of hardware and software.

The descriptions above are only the preferable embodiments of the present invention and not intended to limit the present invention. For those skilled in the art, the present invention may have various modifications and changes.

**Claims**

1. An access processing method, **characterized by** comprising:

   setting (S303) by a User Equipment, UE, a range of backoff values according to the number of backoffs, wherein the upper limit of the backoff range is reduced as the number of backoffs increases;
   randomly selecting (S304) a backoff value from the backoff range; and
   sending (S305), by the UE, a random access preamble to a base station by using the selected backoff value.

2. The method according to Claim 1, **characterized in that** the step of setting, by the UE, the range of the backoff values according to the number of backoffs comprises:

   receiving, by the UE, an Random Access Response, RAR, from the base station, wherein the RAR carries a Backoff Indication, BI, sub-header;
   determining, by the UE, a maximum backoff value according to the BI sub-header; and
   setting, by the UE, the range according to the number of backoffs and the maximum backoff value.

3. The method according to Claim 2, **characterized in that** the step of setting, by the UE, the range according to the number of backoffs and the maximum backoff value comprises:

   reducing, by the UE, the maximum backoff value according to the number of backoffs, and setting the reduced maximum backoff value as the upper limit of the backoff values in the range.

4. The method according to Claim 2, **characterized in that** the step of setting, by the UE, the range according to the number of backoffs and the maximum backoff value comprises:

   dividing, by the UE, a backoff value range between 0 and the maximum backoff value into groups; and
   making, by the UE, the groups corresponding to the number of backoffs.

5. The method according to any one of Claims 1 to 4, **characterized in that** the step of sending, by the UE, the random access preamble to the base station by using the backoff value in the range comprises:

   selecting, by the UE, the backoff value from the range according to uniform distribution principle; and
   sending, by the UE, the random access preamble to the base station by using the backoff value.

6. A user equipment, **characterized by** comprising:

   a setting module (62), configured to set a range of backoff values according to the number of backoffs, wherein the upper limit of the backoff range is reduced as the number of backoffs increases; and
   a sending module (64) configured to send a random access preamble to a base station by using a backoff value in the range, wherein the backoff value is selected randomly from the backoff range.

7. The user equipment according to Claim 6, **characterized in that** the setting module comprises:

   a receiving sub-module (702), configured to receive an Random Access Response, RAR, from the base station, wherein the RAR carries a Backoff Indication, BI, sub-header;
   a determining sub-module (704), configured to determine a maximum backoff value according to the BI sub-header; and
   a setting sub-module (710), configured to set the range according to the number of backoffs and the maximum backoff value.

8. The user equipment according to claim 7, **characterized in that** the setting sub-module comprises:

   a reducing unit (708), configured to reduce the maximum backoff value according to the number of backoffs; and
a setting unit (710), configured to set the reduced maximum backoff value as the upper limit of the backoff values in the range.

9. The user equipment according to Claim 7, **characterized in that** the setting sub-module comprises:

   a grouping unit (82), configured to divide a backoff value range between 0 and the maximum backoff value into groups; and
   a corresponding unit (84), configured to make the groups corresponding to the number of backoffs.

**Patentansprüche**

1. Verfahren zur Zugriffsverarbeitung, **dadurch gekennzeichnet, dass** es Folgendes umfasst:

   Einstellen (S303) eines Bereichs von Backoff-Werten gemäß der Anzahl an Backoffs durch ein Benutzergerät (UE), wobei die Obergrenze des Backoff-Bereichs verringert wird, wenn die Anzahl der Backoffs erhöht wird;
   zufälliges Auswählen (S304) eines Backoff-Werts aus dem Backoff-Bereich; und
   Senden (S305) einer Direktzugriffspräambel zu einer Basisstation durch das UE durch Verwenden des ausgewählten Backoff-Werts.

2. Verfahren nach Anspruch 1, **dadurch gekennzeichnet, dass** der Schritt des Einstellens des Bereichs der Backoff-Werte durch das UE gemäß der Anzahl an Backoffs Folgendes umfasst:

   Empfangen einer Direktzugriffsantwort (RAR) von der Basisstation durch das UE, wobei die RAR einen Backoff-Anzeige(BI)-Sub-Header trägt;
   Bestimmen eines maximalen Backoff-Werts durch das UE gemäß dem BI-Sub-Header; und
   Einstellen des Bereichs durch das UE gemäß der Anzahl der Backoffs und dem maximalen Backoff-Wert.

3. Verfahren nach Anspruch 2, **dadurch gekennzeichnet, dass** der Schritt des Einstellens des Bereichs durch das UE gemäß der Anzahl an Backoffs und dem maximalen Backoff-Wert Folgendes umfasst:

   Verringern des maximalen Backoff-Werts durch das UE gemäß der Anzahl an Backoffs; und
   Einstellen des verringerten maximalen Backoff-Werts als die Obergrenze der Backoff-Werte in dem Bereich.

**4.** Verfahren nach Anspruch 2, **dadurch gekennzeichnet, dass** der Schritt des Einstellens des Bereichs durch das UE gemäß der Anzahl an Backoffs und dem maximalen Backoff-Wert Folgendes umfasst:

Teilen eines Backoff-Wertebereichs zwischen 0 und dem maximalen Backoff-Wert in Gruppen durch das UE; und
Erstellen der Gruppen durch das UE entsprechend der Anzahl an Backoffs.

**5.** Verfahren nach einem der Ansprüche 1 bis 4, **dadurch gekennzeichnet, dass** der Schritt des Sendens der Direktzugriffspräambel zu der Basisstation durch das UE durch das Verwenden des Backoff-Werts in dem Bereich Folgendes umfasst:

Auswählen des Backoff-Werts durch das UE aus dem Bereich gemäß dem Gleichverteilungsprinzip; und
Senden der Direktzugriffspräambel zu der Basisstation durch das UE durch Verwenden des Backoff-Werts.

**6.** Benutzergerät, **dadurch gekennzeichnet, dass** es Folgendes umfasst:

ein Einstellungsmodul (62), das konfiguriert ist, um einen Bereich von Backoff-Werten gemäß der Anzahl an Backoffs einzustellen, wobei die Obergrenze des Backoff-Bereichs verringert wird, wenn die Anzahl der Backoffs erhöht wird; und
ein Sendemodul (64), das konfiguriert ist, um eine Direktzugriffspräambel zu einer Basisstation durch Verwenden eines Backoff-Werts in dem Bereich zu senden, wobei der Backoff-Wert zufällig aus dem Backoff-Bereich ausgewählt wird.

**7.** Benutzergerät nach Anspruch 6, **dadurch gekennzeichnet, dass** das Einstellungsmodul Folgendes umfasst:

ein Empfangsuntermodul (702), das konfiguriert ist, um eine Direktzugriffsantwort (RAR) von der Basisstation zu empfangen, wobei die RAR einen Backoff-Anzeige(BI)-Sub-Header trägt;
ein Bestimmungsuntermodul (704), das konfiguriert ist, um einen maximalen Backoff-Wert gemäß dem BI-Sub-Header zu bestimmen; und
ein Einstellungsuntermodul (710), das konfiguriert ist, um den Bereich gemäß der Anzahl an Backoffs und dem maximalen Backoff-Wert einzustellen.

**8.** Benutzergerät nach Anspruch 7, **dadurch gekenn-**

**zeichnet, dass** das Einstellungsuntermodul Folgendes umfasst:

eine Verungerungseinheit (708), die konfiguriert ist, um den maximalen Backoff-Wert gemäß der Anzahl an Backoffs zu verringern; und eine Einstellungseinheit (710), die konfiguriert ist, um den verringerten maximalen Backoff-Wert als die Obergrenze der Backoff-Werte in dem Bereich einzustellen.

**9.** Benutzergerät nach Anspruch 7, **dadurch gekennzeichnet, dass** das Einstellungsuntermodul Folgendes umfasst:

eine Gruppierungseinheit (82), die konfiguriert ist, um einen Backoff-Wertebereich zwischen 0 und dem maximalen Backoff-Wert in Gruppen zu teilen; und eine korrespondierende Einheit (84), die konfiguriert ist, um die Gruppen entsprechend der Anzahl an Backoffs zu erstellen.

**Revendications**

**1.** Procédé de traitement d'accès, **caractérisé en ce qu'**il comprend :

le réglage (S303) par un Équipement Utilisateur, UE, d'une plage de valeurs de délais d'attente en fonction du nombre de délais d'attente, dans lequel la limite supérieure de la plage de délais d'attente diminue quand le nombre de délais d'attente augmente ;
la sélection aléatoire (S304) d'une valeur de délai d'attente dans la plage de délais d'attente ; et l'envoi (S305), par l'UE, d'un préambule d'accès aléatoire à une station de base en utilisant une valeur de délai d'attente sélectionnée.

**2.** Procédé selon la revendication 1, **caractérisé en ce que** l'étape de réglage, par l'UE, d'une plage de valeurs de délais d'attente en fonction du nombre de délais d'attente comprend :

la réception, par l'UE, d'une réponse d'accès aléatoire, RAR, en provenance de la station de base, dans lequel la RAR porte un sous en-tête indicateur de délai d'attente, BI ;
la détermination, par l'UE, d'une valeur de délai d'attente maximum en fonction du sous en-tête BI;et
le réglage, par l'UE, de la plage en fonction du nombre de délais d'attente et de la valeur de délai d'attente maximum.

**3.** Procédé selon la revendication 2, **caractérisé en ce que** l'étape de réglage, par l'UE, de la plage en fonction du nombre de délais d'attente et de la valeur de délai d'attente maximum comprend :

> la réduction, par l'UE, de la valeur de délai d'attente maximum en fonction du nombre de délais d'attente, et le réglage de la valeur de délai d'attente maximum réduite en tant que limite supérieure des valeurs de délais d'attente dans la plage.

4.  Procédé selon la revendication 2, **caractérisé en ce que** l'étape de réglage, par l'UE, de la plage en fonction du nombre de délais d'attente et de la valeur de délai d'attente maximum comprend :

> la division, par l'UE, d'une plage de valeurs de délais d'attente entre 0 et la valeur de délai d'attente maximum en groupes ; et
> l'établissement, par l'UE, des groupes correspondant au nombre de délais d'attente.

5.  Procédé selon l'une quelconque des revendications 1 à 4, **caractérisé en ce que** l'étape d'envoi, par l'UE, d'un préambule d'accès aléatoire à la station de base en utilisant une valeur de délai d'attente dans la plage comprend :

> la sélection, par l'UE, de la valeur de délai d'attente dans la plage en fonction du principe de distribution uniforme ; et
> l'envoi, par l'UE, du préambule d'accès aléatoire à la station de base en utilisant la valeur de délai d'attente.

6.  Équipement utilisateur, **caractérisé en ce qu'**il comprend :

> un module de réglage (62), configuré pour régler une plage de valeurs de délais d'attente en fonction du nombre de délais d'attente, dans lequel la limite supérieure de la plage de délais d'attente baisse quand le nombre de délais d'attente augmente ; et
> un module d'envoi (64) configuré pour envoyer un préambule d'accès aléatoire à une station de base en utilisant une valeur de délai d'attente dans la plage, dans lequel la valeur de délai d'attente est sélectionnée de manière aléatoire dans la plage de délais d'attente.

7.  Équipement utilisateur selon la revendication 6, **caractérisé en ce que** le module de réglage comprend :

> un sous-module de réception (702), configuré pour recevoir une réponse d'accès aléatoire, RAR, en provenance de la station de base, dans lequel la RAR porte un sous en-tête indicateur de délai d'attente, BI ;
un sous-module de détermination (704), configuré pour déterminer une valeur de délai d'attente maximum en fonction du sous en-tête BI ; et
un sous-module de réglage (710), configuré pour régler la plage en fonction du nombre de délais d'attente et de la valeur de délai d'attente maximum.

8.  Équipement utilisateur selon la revendication 7, **caractérisé en ce que** le sous-module de réglage comprend :

> une unité de réduction (708), configurée pour réduire la valeur de délai d'attente maximum en fonction du nombre de délais d'attente, et une unité de réglage (710), configurée pour régler la valeur de délai d'attente maximum réduite en tant que limite supérieure des valeurs de délais d'attente dans la plage.

9.  Équipement utilisateur selon la revendication 7, **caractérisé en ce que** le sous-module de réglage comprend:

> une unité de groupement (82), configurée pour diviser une plage de valeurs de délais d'attente entre 0 et la valeur de délai d'attente maximum en groupes ; et une unité de correspondance (84) configurée pour établir les groupes correspondant au nombre de délais d'attente.

User Equipment     Base Station

① Random Access Pilot (MSG1)

Random Access Response Pilot (MSG2) ②

③ RRC Connection Establishment Request(MSG3)

RRC Connection Establishment(MSG4) ④

**Fig.1**

A UE sets a range of backoff values according to a backoff time    S202

The UE sends a pilot to a base station by using a backoff value in the range    S204

**Fig.2**

Start

S301

Is the RAPID in the RAR sub-header of the MSG2 consistent with the sent one?

Y

N

Is the BI sub-header available?

N

Y

Obtain the upper limit of backoff by looking up the table according to the BI sub-header

S302

Retry to send the MSG1 by selecting the recent transmission opportunity capable of sending the MSG1 according to the configuration

Determine the new upper and lower limits of the current backoff value with reference to the current sending time of the UE

S303

Generate the backoff value randomly in the new range according to the uniform distribution

S304

Preamble success Send the MSG3...

Reinitiate the random access after backing off for a period of time

S305

End

**Fig.3**

| E/T/R/R/BI Sub-header | E/T/RAPID Sub-header 1 | E/T/RAPID Sub-header 2 | ... | E/T/RAPID Sub-header n |
|---|---|---|---|---|

| MAC Header | MAC RAR 1 | MAC RAR 2 | ... | MAC RAR n | Padding (Optional) |
|---|---|---|---|---|---|

◄————————MAC Load————————►

**Fig.4**

| E/T/R/R/BI Sub-header | E/T/RAPID Sub-header 1 | E/T/RAPID Sub-header 2 | ... | E/T/RAPID Sub-header n |
|---|---|---|---|---|

| MAC Header | MAC RAR 1 | MAC RAR 2 | ... | MAC RAR n | Padding (Optional) |
|---|---|---|---|---|---|

◄─────────── MAC Load ───────────►

# Fig.5

Setting Module**62**

↓

Sending Module**64**

**Fig.6**

Receiving Sub-module **702**

↓

Determining Sub-module**704**

↓

Reducing Unit **708**

↓

Setting Unit**710**

Setting Module**62**

↓

Sending Module**64**

**Fig.7**

Receiving Sub-module702

Determining Sub-module704

Grouping Unit82

Corresponding Unit84

Setting Sub-module706

Sending Module64

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2086276 A